# EUROPEAN PATENT APPLICATION

(11) **EP 4 782 204 A1**
(43) Date of publication of application: **29.07.2026**
(21) Application number: 25154143.9
(22) Date of filing: 27.01.2025
(51) Int. Cl.: B32B 17/10, B32B 3/30, B32B 7/027, B33Y 80/00

(54) **INTERLAYER FILM FOR LAMINATED GLASS COMPRISING A DECORATIVE PATTERN**

(71) Applicant: Kuraray Europe GmbH, 65795 Hattersheim (DE)
(72) Inventor: ESCHRICH, Robin, 53840 Troisdorf (DE); Klee, Henrik, Düsseldorf (DE); VOLPI, Leonard, 53840 Troisdorf (DE); LAZAR, Ion, 53840 Troisdorf (DE)
(74) Representative: Janßen, Christian Oliver

(57) **Abstract**

1. The present invention relates to a method for preparing a laminated glass with a three-dimensional decorative pattern comprising the following steps, in that order:
a. Providing a first layer, comprising a first thermoplastic resin, and having a first glass transition temperature;
b. Applying a second layer, comprising a second thermoplastic resin, and having a second glass transition temperature, which is higher than the first glass transition temperature, comprising the three-dimensional decorative pattern;
c. Laminating the first and the second layer between two sheets of rigid material, wherein the three-dimensional decorative pattern of the second layer is pushed into the first layer displacing at least partially the first layer during the lamination process.

## Description

The present invention relates to methods for preparing decorative laminated glass, and more particularly to techniques for incorporating three-dimensional decorative patterns into such laminated glass products.

Colored or printed interlayer films for laminated glass are well-established and are detailed for example in DE102004000026A1 and EP3401092B1. These interlayer films are commonly utilized in the production of tinted laminated glass or as shade bands in windshields. Advanced decorative interlayer films can be created by printing entire images onto these films using inkjet technology, as described in US20080206504A1. With the trend towards larger glass surfaces in both architectural and automotive applications, particularly evident in the increasing use of larger sunroofs in vehicles, there is a growing demand for even more advanced decorative elements in laminated glass. Three-dimensional elements are generally regarded as particularly appealing.

Accordingly, it was an object of the present invention to provide a method by which a laminated glass with a three-dimensional decorative pattern can be obtained.

It has now been surprisingly found by the inventors that laminated glass comprising a three-dimensional decorative pattern can be obtained by combining two layers comprising thermoplastic resins with different glass transition temperatures. The glass transition temperatures must be chosen in such a way that the two thermoplastic resins do not merge during the lamination process, but rather one thermoplastic resin displaces the other, allowing the three-dimensional decorative pattern to form in the laminated glass. To this end, the glass transition temperature of the thermoplastic resin of the layer comprising the three-dimensional decorative pattern is chosen to be higher than the glass transition temperature of the thermoplastic resin of the other layer.

The present invention therefore provides a method for preparing a laminated glass with a three-dimensional decorative pattern comprising the following steps, in that order:
a. providing a first layer, comprising a first thermoplastic resin, and having a first glass transition temperature;
b. applying a second layer, comprising a second thermoplastic resin, and having a second glass transition temperature, which is higher than the first glass transition temperature, comprising the three-dimensional decorative pattern;
c. laminating the first and the second layer between two sheets of rigid material, wherein the three-dimensional decorative pattern of the second layer is pushed into the first layer displacing at least partially the first layer during the lamination process.

The second layer comprising the three-dimensional decorative pattern can be applied to the first layer by various techniques known to the skilled person. The second layer can be manufactured by solvent casting, conventional melt extrusion or melt molding processes suitable for making interlayer films for laminated glass. The three-dimensional decorative pattern of the second interlayer film can either be generated directly during the manufacturing process or subsequently by cutting or punching. Additionally, the three-dimensional decorative pattern of the second interlayer film can be generated using additive manufacturing techniques. The three-dimensional decorative pattern of the second interlayer film is preferably printed directly onto the first interlayer film or the rigid material. Additive manufacturing techniques are particularly suitable for generating complex and discrete patterns.

The lamination step for producing a laminated glass is preferably carried out such that the first and the second layer are positioned between two sheets of rigid material and the layered body thus prepared is pressed under increased or reduced pressure and increased temperature to form a laminate.

In the context of this application, the term "laminated glass" is to be understood to comprise the first and second layer between two sheets or a rigid material, including but not limited to glass.

Preferably, the rigid material comprises glass, polymethacrylate or polycarbonate.

To laminate the layered body, the methods known to the skilled person can be used with and without prior production of a pre-laminate.

Preferably, the first glass transition temperature of the first layer is between 0 °C and 70 °C, or between 5 °C and 70 °C, or between 10 °C and 70 °C, or between 15 °C and 70 °C, or between 20 °C and 70 °C, or between 25 °C and 70 °C, or between 30 °C and 70 °C, or between 35 °C and 70 °C, or between 40 °C and 70 °C, or between 45 °C and 70 °C, or between 50 °C and 70 °C, or between 55 °C and 70 °C, or between 60 °C and 70 °C, or between 65 °C and 70 °C. More preferably, the first glass transition temperature of the first layer is between 5 °C and 50 °C, or between 5 °C and 45 °C, or between 5 °C and 40 °C, or between 5 °C and 35 °C, or between 5 °C and 30 °C.

Preferably, the second glass transition temperature of the second layer is between 10 °C and 100 °C, or between 15 °C and 100 °C, or between 20 °C and 100 °C, or between 25 °C and 100 °C, or between 30 °C and 100 °C, or between 35 °C and 100 °C, or between 40 °C and 100 °C, or between 45 °C and 100 °C, or between 50 °C and 100 °C, or between 55 °C and 100 °C, or between 60 °C and 100 °C, or between 65 °C and 100 °C, or between 70 °C and 100 °C, or between 75 °C and 100 °C, or between 80 °C and 100 °C, or between 85 °C and 100 °C, or between 90 °C and 100 °C, or between 95 °C and 100 °C. More preferably, the second glass transition temperature of the second layer is between 20 °C and 100 °C, or between 20 °C and 95 °C, or between 20 °C and 90 °C, or between 20 °C and 85 °C, or between 20 °C and 80 °C, or between 20 °C and 75 °C, or between 20 °C and 70 °C, or between 20 °C and 65 °C, or between 20 °C and 60 °C, or between 20 °C and 55 °C, or between 20 °C and 50 °C, or between 20 °C and 45 °C, or between 20 °C and 40 °C, or between 20 °C and 35 °C, or between 20 °C and 30 °C, or between 20 °C and 25 °C. Most preferably, the second glass transition temperature of the second layer is between 40 °C and 95 °C, or between 45 °C and 95 °C, or between 50 °C and 95 °C, or between 55 °C and 95 °C, or between 60 °C and 95 °C, or between 65 °C and 95 °C, or between 70 °C and 95 °C, or between 75 °C and 95 °C, or between 80 °C and 95 °C, or between 85 °C and 95 °C.

Preferably, the three-dimensional decorative pattern comprises multiple discrete three-dimensional decorative patterns. The term "multiple discrete three-dimensional decorative patterns" is to be understood in the sense that these are not connected and can therefore be arranged in any chosen pattern within the laminated glass. The incorporation of multiple discrete three-dimensional decorative patterns adds aesthetic value to the product, allowing for a variety of designs that can cater to different consumer preferences and market trends.

Preferably, the three-dimensional decorative pattern has a thickness of more than 10 µm and less than 3000 µm, or more than 20 µm and less than 2000 µm, or more than 30 µm and less than 1000 µm. More preferably, the three-dimensional decorative pattern has a thickness of more than 50 µm and less than 1000 µm, or more than 50 µm and less than 900 µm, or more than 50 µm and less than 840 µm, or more than 50 µm and less than 800 µm, or more than 50 µm and less than 760 µm, or more than 50 µm and less than 700 µm, or more than 50 µm and less than 600 µm, or more than 50 µm and less than 500 µm, or more than 50 µm and less than 400 µm, or more than 50 µm and less than 380 µm, or more than 50 µm and less than 300 µm, or more than 50 µm and less than 250 µm, or more than 50 µm and less than 200 µm, or more than 50 µm and less than 150 µm, or more than 50 µm and less than 100 µm, or 60 µm, or 70 µm, or 80 µm, or 90 µm. Most preferably, the three-dimensional decorative pattern has a thickness of more than 100 µm and less than 200 µm, or more than 110 µm and less than 200 µm, or more than 120 µm and less than 200 µm, or more than 130 µm and less than 200 µm, or more than 140 µm and less than 200 µm, or more than 150 µm and less than 200 µm, or more than 160 µm and less than 200 µm, or more than 170 µm and less than 200 µm, or more than 180 µm and less than 200 µm, or more than 190 µm and less than 200 µm.

The second interlayer film preferably comprises multiple three-dimensional decorative patterns with different thicknesses.

Preferably, the first thermoplastic resin of the first layer and the second thermoplastic resin of the second layer comprise polyvinyl acetal, ethylene vinyl acetate, ethylene vinyl acetal, polyurethane, ionomer, polyethylene terephthalate or mixtures thereof.

The first thermoplastic resin and the second thermoplastic resin preferably contains polyvinyl acetals, or ethylene vinyl acetals which can be produced by acetalization of polyvinyl alcohol or ethylene vinyl alcohol copolymer.

Preferably, the polyvinyl acetal has a degree of acetalization between 60 to 95 wt%, a degree of acetylation between 0.1 to 15 wt% and a degree of polymerization between 200 to 4500.

The degree of polymerization of the polyvinyl alcohol is preferably between 200 and 4500. Also preferably, the degree of polymerization is 900 or more, more preferably 1700 or more, or 2400 or more, or 3100 or more, or 3800 or more, or 4500 or more.

The degree of polymerization of the polyvinyl alcohol is determined in accordance with JIS K 6726 (1994).

The first thermoplastic resin and the second thermoplastic resin can comprise more than one polyvinyl acetal, each having a different polyvinyl alcohol content, degree of acetalization, residual acetate content, ethylene proportion, molecular weight and/or different chain lengths of the aldehyde of the acetal groups.

The polyvinyl acetate content of the polyvinyl acetal used in the interlayer film may be between 0.1 to 15 % by weight, preferably 0.1 to 2 % by weight, or 4 to 11 % by weight.

The polyvinyl alcohol content of the polyvinyl acetal used in first thermoplastic resin and the second thermoplastic resin may be between 6 to 26 % by weight, 8 to 24 % by weight, 10 to 22 % by weight, 11 to 21 % by weight, 14 to 20 % by weight, 16 to 19 % by weight and preferably between 16 to 21 % by weight or 10 to 16 % by weight.

The polyvinyl alcohol content and polyvinyl acetate content of polyvinyl acetal can be determined in accordance with ASTM D 1396-92. The degree of acetalization is calculated as the remaining portion from the sum of polyvinyl alcohol content and polyvinyl acetate content determined in accordance with ASTM D 1396-92 needed to make one hundred. Conversion from % by weight into mol % is achieved by formulas known to the person skilled in the art.

The polyvinyl acetal content of the polyvinyl acetal used in the first thermoplastic resin and the second thermoplastic resin may be between 60 to 95 % by weight. Preferably between 65 to 90 % by weight, more preferably between 70 to 85 % by weight and most preferably between 75 to 85 % by weight.

Preferably, the first thermoplastic resin of the first layer and the second thermoplastic resin of the second layer comprise a polyvinyl acetal, which is a polyvinyl butyral.

The aldehydes used for the production of the polyvinyl acetal can be linear or branched (that is to say of the "n"or "iso"type) containing 2 to 10 carbon atoms, which leads to corresponding linear or branched acetal groups. The polyvinyl acetals are referred to accordingly as "polyvinyl (iso)acetals"or "polyvinyl (n)acetals". N-butyraldehyde is preferably used and the most preferably polyvinyl acetal is polyvinyl butyral (PVB).

Preferably, the first layer comprises a plasticizer.

The glass transition temperature of the first layer can be adjusted via the type and quantity of plasticizer used.

Examples of suitable plasticizers include one or more compounds selected from the following groups: esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate. esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate phosphates with aliphatic or aromatic ester alcohols, such as tris(2-ethylhexyl)phosphate (TOF), triethyl phosphate, diphenyl-2-ethylhexyl phosphate, and/or tricresyl phosphate esters of citric acid, succinic acid and/or fumaric acid.

Preferably, the amount of plasticizer comprised in the first layer is between 1 to 45 %wt, or between 5 to 45 %wt, or between 10 to 45 %wt, or between 15 to 45 %wt, or between 20 to 45 %wt, or between 25 to 45 %wt. More preferably, the amount of plasticizer comprised in the first layer is between 20 to 40 %wt, or between 20 to 35 %wt, or between 20 to 30 %wt.

Preferably, the first and/or the second layer comprises a colorant or inorganic particles.

The colorant is not particularly limited, and any pigment or dye conventionally used in interlayer films for a laminated glass may be used.

The use of a colorant allows for the reduction of light transmission, which can be particularly advantageous in car glass roofs. Additionally, the incorporation of inorganic particles can scatter incoming light.

Suitable pigments and dyes may comprise carbon black, iron oxides, spinel pigments, organic color pigments or dyes like diazo dyes, phthalocyanines, perylenes, anthraquinones, anthrapyrimidines, quinophthalone, perinones, quinacridones, or diketopyrrolopyroles.

Inorganic particles can be selected from TiO₂, SiO₂, CaCOs, ZnO, Al₂O₃, ZrO₂.

Preferably, the three-dimensional decorative pattern of the second layer comprises a pyramid shape.

The term "pyramid shape" refers to a geometric form that consists of a polygonal base and triangular faces that converge at a single point called the apex. The base can be any polygon, such as a square, triangle, or hexagon, and the number of triangular faces corresponds to the number of sides of the base.

Preferably, the second layer is formed through an additive manufacturing process. Utilizing an additive manufacturing techniques for the formation of the second layer allows for greater design flexibility, enabling the creation of complex geometries that would be difficult or impossible to achieve with traditional manufacturing methods. Preferably, the additive manufacturing process is performed using a 3D printer.

The additive manufacturing process can reduce material waste, as it allows for precise construction, leading to more sustainable production practices.

Another object of the invention is a laminated glass prepared according to the method described above.

Yet another object of the invention is the use of the above described laminated glass in a vehicle or a building.

Determination of the glass transition temperature occurs by means of Differential Scanning Calorimetry (DSC) in accordance with DIN 53765.

## Claims

1. A method for preparing a laminated glass with a three-dimensional decorative pattern comprising the following steps, in that order:
a. providing a first layer, comprising a first thermoplastic resin, and having a first glass transition temperature;
b. applying a second layer, comprising a second thermoplastic resin, and having a second glass transition temperature, which is higher than the first glass transition temperature, comprising the three-dimensional decorative pattern;
c. laminating the first and the second layer between two sheets of rigid material, wherein the three-dimensional decorative pattern of the second layer is pushed into the first layer displacing at least partially the first layer during the lamination process.

2. The method according to claim 1, wherein the first glass transition temperature of the first layer is between 0 °C and 70 °C.

3. The method according to claim 1 or 2, wherein the second glass transition temperature of the second layer is between 10 °C and 100 °C.

4. The method according to any one of claims 1 to 3, wherein the three-dimensional decorative pattern comprises multiple discrete three-dimensional decorative patterns.

5. The method according to any one of claim 1 to 4, wherein the three-dimensional decorative pattern has a thickness of more than 10 µm and less than 3000 µm.

6. The method according to any one of claim 1 to 5, wherein the first thermoplastic resin of the first layer and the second thermoplastic resin of the second layer comprise polyvinyl acetal, ethylene vinyl acetate, ethylene vinyl acetal, polyurethane, ionomer, polyethylene terephthalate or mixtures thereof.

7. The method according to any one of claims 1 to 6, wherein the first thermoplastic resin of the first layer and the second thermoplastic resin of the second layer comprise a polyvinyl acetal, which is a polyvinyl butyral.

8. The method according to any one of claims 1 to 7, wherein the first layer comprises a plasticizer.

9. The method according to any one of claims 1 to 8, wherein the first layer comprises a colorant or inorganic particles.

10. The method according to any one of claims 1 to 9, wherein the second layer comprises a colorant or inorganic particles.

11. The method according to any one of claims 1 to 10, wherein the three-dimensional decorative pattern of the second layer comprises a pyramid shape.

12. The method according to any one of claims 1 to 11, wherein the second layer is formed by an additive manufacturing process.

13. The method according to any one of claims 1 to 12, wherein the rigid material comprises glass, polymethacrylate or polycarbonate.

14. A laminated glass prepared according to any one of claims 1 to 13.

15. Use of the laminated glass according to claim 14 in a vehicle or a building.
